# FASCICULE DE BREVET EUROPEEN

(11) **EP 4 433 292 B1**
(45) Date de publication et mention de la délivrance du brevet: **03.12.2025**
(21) Numéro de dépôt: 22802683.7
(22) Date de dépôt: 25.10.2022
(51) Int. Cl.: B29D 30/02, B60B 1/00, B60B 9/26, B60B 31/00

(54) **DISPOSITIF POUR ASSEMBLER LES RAYONS D'UN BANDAGE POUR ROUE AU MOYEN DE POUSSOIRS QUI SONT ACTIONNES ET SUSPENDUS ELASTIQUEMENT PAR DES LEVIERS**
VORRICHTUNG ZUM MONTIEREN DER SPEICHEN EINES REIFENS FÜR EIN RAD MITTELS HEBELBETÄTIGTER UND ELASTISCH AUFGEHÄNGTER DRUCKGLIEDER
DEVICE FOR ASSEMBLING THE SPOKES OF A TYRE FOR A WHEEL BY MEANS OF THRUST MEMBERS THAT ARE ACTUATED AND ELASTICALLY SUSPENDED BY LEVERS

(30) Priorité: 15.11.2021 FR 2112030
(43) Date de publication de la demande: 25.09.2024
(73) Titulaire: COMPAGNIE GENERALE DES ETABLISSEMENTS MICHELIN, 63000 Clermont-Ferrand (FR)
(72) Inventeur: BESSAC, Christophe, 63040 CLERMONT-FERRAND Cedex 9 (FR); CHEVREL, Lucie, 63040 CLERMONT-FERRAND Cedex 9 (FR); DELORME, Jean-Claude, 63040 CLERMONT-FERRAND Cedex 9 (FR); BUNGE, Yorrick, 63040 CLERMONT-FERRAND Cedex 9 (FR)
(74) Mandataire: M.F.P. Michelin
(86) Numéro de dépôt international: PCT/FR2022/052018
(87) Numéro de publication internationale: WO 2023/084172

(56) Documents cités:
- WO-A1-2018/125188
- WO-A1-2019/103728
- WO-A2-2013/130047

## Description

La présente invention concerne le domaine de la fabrication des bandages pour roues de véhicule, et plus particulièrement la fabrication de bandages dits « sans air », au sein desquels une bande annulaire périphérique comprenant la bande de roulement est soutenue mécaniquement par une pluralité de rayons solides qui relient ladite bande annulaire périphérique à un moyeu.

Le document WO-2019/103728 décrit un outillage qui permet de fixer les rayons simultanément au moyeu et à la bande annulaire périphérique, en pressant un pied de chacun desdits rayons contre ledit moyeu, et l'autre pied de chacun desdits rayons contre la bande annulaire périphérique, au moyen de poussoirs qui sont entraînés en déplacement radial par des membranes gonflables annulaires.

Plus précisément, dans cet outillage connu, tous les poussoirs qui agissent selon une direction radiale centripète pour plaquer contre le moyeu les pieds radialement internes des différents rayons sont entraînés simultanément par un premier jeu de deux membranes, qui comprend une membrane inférieure située au dos de l'une des extrémités axiales desdits poussoirs, et une membrane supérieure située au dos de l'autre extrémité axiale desdits poussoirs.

De même, tous les poussoirs qui agissent selon une direction radiale centrifuge pour plaquer contre la bande annulaire périphérique les pieds radialement externes de ces mêmes rayons sont entraînés simultanément par un second jeu de deux membranes qui viennent en prise respectivement contre le dos des deux extrémités axiales opposées desdits poussoirs.

Si un tel outillage donne globalement satisfaction, il peut toutefois présenter certaines limitations.

En particulier, un tel outillage peut être relativement sensible à d'éventuelles variations locales des frottements qui s'exercent sur les différents poussoirs lors des déplacements radiaux desdits différents poussoirs, ou bien à des variations dans le comportement mécanique individuel des différents rayons en réaction au gonflage de la membrane et à l'action correspondante des poussoirs, ou bien encore à une éventuelle répartition inégale du gaz de gonflage soit au sein d'une même membrane soit entre deux membranes d'un même jeu de membranes.

Selon les circonstances, il est en effet possible que ces facteurs puissent causer un blocage des poussoirs par arc-boutement, ou bien un léger défaut de positionnement de certains rayons qui pourra parfois conduire à un chevauchement indésirable des pieds de deux rayons voisins.

En outre, les facteurs susmentionnés peuvent également être à l'origine d'une certaine hétérogénéité, d'un rayon à l'autre, dans l'intensité des efforts de compression radiale qui pressent les différents rayons contre le moyeu, respectivement contre la bande annulaire périphérique, pendant le processus de collage des rayons. Or, si l'effort de compression radiale exercé pendant l'assemblage est significativement insuffisant, cela peut éventuellement conduire à l'apparition d'une zone de fragilité dans la jonction entre le pied du rayon et le moyeu, ou respectivement la bande annulaire périphérique, et donc à une mise au rebut du bandage.

Pour toutes ces raisons, il peut être parfois difficile d'obtenir un bandage parfaitement homogène à l'issue du processus d'assemblage connu, ou bien encore de garantir la parfaite reproductibilité dudit processus d'un bandage à l'autre.

Par ailleurs, les membranes peuvent être sujettes à des agressions mécaniques, notamment par abrasion, coupure ou perforation, ce qui peut, dans certains cas, limiter la durée de vie de l'outillage.

Les objets assignés à l'invention visent par conséquent à remédier aux inconvénients susmentionnés et proposer un nouvel outillage d'assemblage particulièrement robuste et durable, et qui permette une fabrication rapide, reproductible, fiable et précise de bandages sans air qui présenteront une structure homogène et d'excellente qualité.

Les objets assignés à l'invention sont atteints au moyen d'un dispositif d'assemblage destiné à la fabrication d'un bandage qui comprend un moyeu présentant un axe central, une bande annulaire périphérique coaxiale au moyeu, et une pluralité de rayons qui relient le moyeu à la bande annulaire périphérique et qui comprennent à cet effet chacun un premier pied fixé sur une face radialement externe dudit moyeu formant une première face réceptrice et un second pied fixé sur une face radialement interne de ladite bande annulaire périphérique formant une seconde face réceptrice, ledit dispositif d'assemblage comprenant une pluralité de sous-ensembles presseurs qui sont affectés chacun à la fixation d'un rayon distinct et qui comportent chacun au moins un poussoir agencé pour presser l'un des premier et second pieds du rayon concerné contre la face réceptrice du moyeu ou respectivement de la bande annulaire périphérique qui correspond audit pied du rayon, ledit dispositif d'assemblage étant caractérisé en ce que chacun desdits sous-ensembles presseurs comprend au moins un curseur qui est monté mobile radialement par rapport à l'axe central, sous la dépendance d'un système d'entraînement, et qui porte un levier qui s'étend depuis un point d'ancrage, par lequel ledit levier est solidarisé avec le curseur, jusqu'à un organe d'appui qui se situe axialement à distance du point d'ancrage selon l'axe central, et par lequel ledit levier vient en appui contre ledit poussoir dans une aire de contact qui d'une part se situe au dos dudit poussoir, à l'opposé radialement du pied et de la face réceptrice, et qui d'autre part est contenue dans la plage axiale que vient occuper le pied concerné le long de l'axe central, de sorte que, lorsque le système d'entraînement déplace radialement le curseur, le levier solidaire dudit curseur d'une part transmet au poussoir, par l'intermédiaire de l'organe d'appui, un effort de serrage qui presse ledit poussoir, et par conséquent le pied du rayon, à l'encontre de la face réceptrice, et d'autre part assure, à la manière d'un ressort, par la capacité de flexion élastique dudit levier, une suspension radiale élastique du poussoir vis-à-vis du curseur et donc à l'encontre du pied du rayon et de la face réceptrice.

Avantageusement, l'agencement proposé par l'invention permet tout d'abord, grâce à la multiplicité des sous-ensembles presseurs, d'agir simultanément sur plusieurs rayons, de préférence sur l'ensemble des rayons, afin de réaliser un assemblage, et notamment un assemblage par collage, dans un temps très court, typiquement en une seule étape, tout en bénéficiant néanmoins d'une gestion individuelle des poussoirs, du fait que la course radiale de chaque curseur est contrôlée individuellement.

Ensuite, le levier qui assure la liaison entre chaque curseur et le poussoir correspondant permet avantageusement de transformer le déplacement radial, imposé, du curseur, en un effort radial qui s'exerce à l'encontre du pied du rayon, dont le déplacement radial est quant à lui limité et stoppé par la face réceptrice correspondante, du moyeu ou respectivement de la bande annulaire périphérique. Dans la mesure où la face réceptrice oppose une résistance au déplacement du pied du rayon, et donc au déplacement du poussoir, cet effort radial généré par le déplacement du curseur se traduit par un effort de serrage, c'est-à-dire un effort radial de compression que le poussoir exerce sur le pied du rayon à l'encontre de la face réceptrice, et qui plaque donc le pied du rayon contre ladite face réceptrice.

De façon particulièrement avantageuse, le levier confère, à la manière d'une lame ressort, la souplesse requise pour permettre au sous-ensemble presseur d'ajuster l'effort de serrage. La raideur dudit levier, ici plus particulièrement la raideur en flexion dudit levier, et la valeur du déplacement radial que l'on impose au curseur, permettront de définir l'intensité de l'effort de serrage, et plus particulièrement de choisir une plage d'intensité d'effort de serrage prédéterminée, de sorte que l'on maîtrisera assez précisément l'effort radial de compression que le poussoir exercera effectivement sur le pied du rayon à l'encontre de la face réceptrice.

Ainsi, chaque sous-ensemble presseur est capable de s'adapter à la configuration propre de chaque poussoir et de chaque pied, liée notamment aux tolérances dimensionnelles de fabrication de ces pièces, et d'accommoder, le cas échéant, les dilatations thermiques lorsqu'il est prévu une phase de cuisson du bandage afin de sceller les rayons aux face réceptrices du moyeu et de la bande annulaire périphérique.

En outre, l'utilisation d'un levier qui permet de placer l'organe d'appui axialement à distance du corps du curseur permet de disposer ledit curseur à distance axiale du poussoir et du pied du rayon, dans une région de l'espace qui n'interfère pas avec celle occupée par le poussoir et le rayon.

On peut ainsi dimensionner ledit curseur et son système de guidage et d'entraînement de sorte à garantir un entraînement précis, robuste et puissant dudit curseur, et ce tout en permettant malgré tout de localiser le point d'application de l'effort radial de compression que le levier exerce sur le poussoir dans une aire de contact qui est sensiblement centrée axialement par rapport au pied du rayon à comprimer, et qui se situe donc en l'espèce sensiblement dans le plan équatorial du bandage, de sorte que d'une part on évite tout basculement accidentel et tout coincement du poussoir par arc-boutement lors du déplacement radial dudit poussoir, et d'autre part ledit poussoir agit comme un répartiteur qui distribue de façon sensiblement homogène l'effort de compression radiale sur toute l'étendue axiale du pied du rayon, ce qui garantit une bonne qualité de fixation.

De surcroît, l'invention permet de réaliser des sous-ensembles presseurs compacts, constitués d'un petit nombre de pièces, et qui sont donc particulièrement robustes et fiables.

La relative simplicité de la structure du dispositif d'assemblage selon l'invention, et donc sa relative légèreté, permet enfin de limiter l'inertie thermique dudit dispositif, ce qui améliore le temps de cycle lorsque celui-ci comprend, pendant que les poussoirs maintiennent les pieds des rayons plaqués contre le moyeu et/ou contre la bande annulaire périphérique, une phase de chauffage destinée à sceller, par collage, les rayons au moyeu et à la bande annulaire périphérique.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 est une vue en perspective d'un bandage sans air assemblé par un dispositif selon l'invention.
La figure 2 illustre, selon une vue en perspective, un rayon du bandage de la figure 1.
La figure 3 représente, selon une vue en perspective avec coupe dans un plan radial contenant l'axe central, un dispositif d'assemblage selon l'invention.
Lafigure 4 représente, selon une vue de détail en coupe dans un plan radial contenant l'axe central, un sous-ensemble presseur utilisé au sein du dispositif de la figure 2.
La figure 5 représente, selon une vue de dessus, en projection dans un plan normal à l'axe central, la coopération entre le sous-ensemble presseur de lafigure 4 et le rayon qui est soumis à l'action dudit sous-ensemble.
La figure 6 représente, selon une vue en perspective, un levier utilisé par les sous-ensembles presseurs présents sur les figures 3 et 4.
La figure 7 représente, selon une vue en perspective, le détail d'un système d'entraînement utilisant des couronnes à guides spiraux agencées pour être mises en rotation autour de l'axe central afin de déplacer radialement les curseurs des sous-ensembles presseurs du dispositif d'assemblage de la figure 3.
La figure 8 représente, selon une vue de détail en coupe de dessus, une possibilité d'accouplement entre les curseurs et les couronnes à guides spiraux du système d'entraînement de la figure 7, au moyen de rainures et languettes.

La présente invention concerne un dispositif 1 d'assemblage destiné à la fabrication d'un bandage 2.

Ledit bandage 2 est destiné à équiper une roue de véhicule.

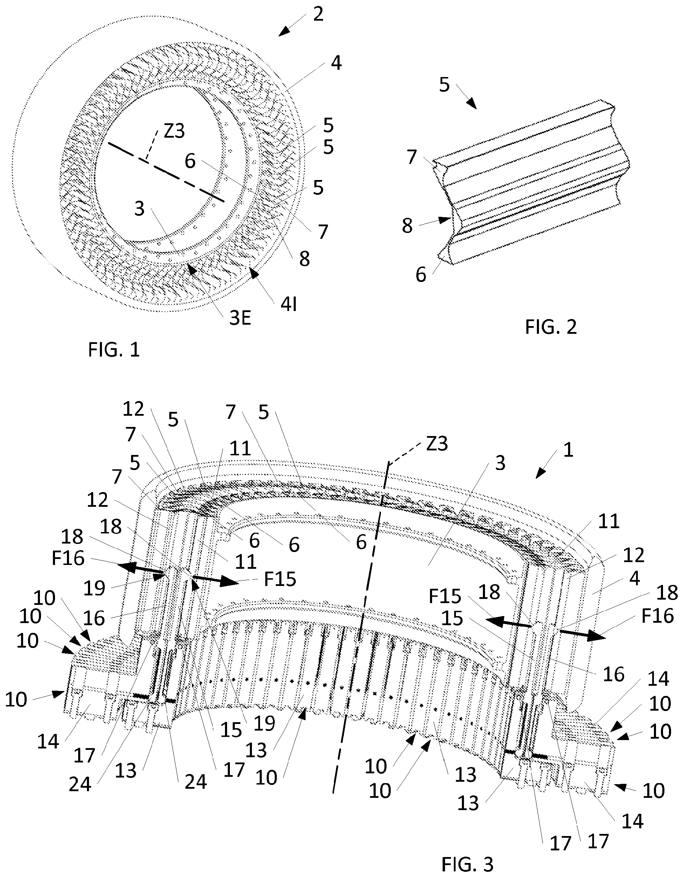

Ledit bandage 2 comprend un moyeu 3 présentant un axe central Z3, une bande annulaire périphérique 4 coaxiale au moyeu 3, et une pluralité de rayons 5 qui relient le moyeu 3 à la bande annulaire périphérique 4, tel que cela est illustré sur la figure 1.

Les rayons 5 permettent avantageusement de soutenir mécaniquement la bande annulaire périphérique 4 par rapport au moyeu 3, sans qu'il soit nécessaire de prévoir une chambre pneumatique qui serait destinée à recevoir un gaz de gonflage sous pression. Le bandage 2 est ainsi de préférence un bandage dit « sans air ».

La « bande annulaire périphérique » 4 désigne ici, de façon très générique, la structure annulaire du bandage 2 qui est portée par les rayons 5 et qui forme la bande de roulement destinée à venir au contact de la route. Ladite bande annulaire périphérique 4 peut ainsi, de façon connue en soi, présenter de préférence une structure stratifiée qui comprend une couronne d'armature radialement interne, contenant une ou plusieurs couches contenant des fils de renfort ou des fibres de renfort noyés dans une résine et/ou dans un matériau à base de caoutchouc, puis une couche radialement externe contenant un ou plusieurs matériaux à base de caoutchouc, et qui forme la bande de roulement du bandage 2.

Le moyeu 3 est un anneau rigide, voire semi-rigide, de forme circulaire, par exemple en alliage métallique ou en matériau composite, qui peut être conçu pour être monté sur une jante, ou bien pour former lui-même une jante apte à être montée directement sur un essieu ou un arbre de roue de véhicule.

Dans ce qui suit, les termes « axial » et « axialement » feront référence à des directions qui sont parallèles à l'axe central Z3, tandis que les termes « radial » et « radialement » font référence à des directions qui sont perpendiculaires audit axe central Z3.

Chacun des rayons 5 comprend, tel que cela est visible sur les figures 1 et 2, un premier pied 6 qui est fixé sur une face radialement externe 3E du moyeu 3, qui forme une première face réceptrice 3E, et un second pied 7 qui est fixé sur une face radialement interne 4I de la bande annulaire périphérique 4 formant une seconde face réceptrice 4I.

La face radialement externe 3E du moyeu 3, qui forme la première face réceptrice 3E, est ici une face cylindrique convexe de base circulaire centrée sur l'axe central Z3.

De même, la face radialement interne 4I de la bande annulaire périphérique 4 formant la seconde face réceptrice 4I est ici une face cylindrique concave de base circulaire centrée sur l'axe central Z3.

Le diamètre de la première face réceptrice 3E appartenant au moyeu 3 est bien entendu strictement inférieur au diamètre de la seconde face réceptrice 4I appartenant à la bande annulaire périphérique 4, la différence étant comblée par les rayons 5.

Le diamètre du moyeu 3, et plus particulièrement le diamètre de la face radialement externe 3E dudit moyeu sur laquelle les rayons 5 prennent appui, pourra être compris entre 30 cm et 60 cm.

Le diamètre externe hors-tout de la bande annulaire périphérique 4 pourra quant à lui être compris entre 50 cm et 90 cm, et la largeur hors-tout de ladite bande annulaire périphérique, considérée le long de l'axe central Z3, comprise entre 100 mm et 400 mm.

Plus préférentiellement, le moyeu 3 pourra former une jante ou être monté sur une jante qui présentera des dimensions qui correspondent aux tailles normalisées des jantes de 12 pouces à 24 pouces utilisées pour les bandages pneumatiques usuels. De même, le bandage 2 pourra, plus globalement, présenter des dimensions, et notamment un diamètre hors-tout et une largeur axiale, qui correspondent aux tailles normalisées des bandages pneumatiques adaptés aux jantes de dimensions normalisées susmentionnées.

Les rayons 5, et plus particulièrement les pieds 6, 7 de ceux-ci, sont de préférence réalisés dans un matériau à base de caoutchouc. Les rayons contiennent de préférence également des éléments de renfort, à base de fils de renfort ou de structures composites comprenant des fibres de renfort, afin d'assurer la tenue mécanique desdits rayons 5 vis-à-vis de la compression radiale.

De préférence, tel que cela est visible sur la figure 2, le premier pied 6 est relié au second pied 7 par une portion centrale 8 du rayon, en forme de V, afin de conférer au rayon 5 une flexibilité maîtrisée qui permet audit rayon d'accommoder élastiquement les déformations du bandage 2 lors du roulage et d'assurer une certaine suspension élastique amortie du moyeu 3, et donc du véhicule, par rapport à la bande annulaire périphérique 4. Ceci permet notamment de procurer un certain confort de roulage, qui peut être proche de celui obtenu avec des bandages pneumatiques usuels.

Selon l'invention, le dispositif d'assemblage 1 comprend une pluralité de sous-ensembles presseurs 10 qui sont affectés chacun à la fixation d'un rayon 5 distinct.

De préférence, le dispositif d'assemblage 1 comprend autant de sous-ensembles presseurs 10 répartis autour de l'axe central Z3 qu'il y a de rayons 5 au sein du bandage 2.

Ainsi, on pourra fixer simultanément tous les rayons 5 au moyeu 3, respectivement à la bande annulaire périphérique 4, en une seule étape de fabrication, ce qui minimisera le temps de cycle de fabrication, et ce tout en profitant malgré tout d'une gestion individualisée de chaque rayon 5.

Les rayons 5, et par conséquent les sous-ensembles presseurs 10 associés, seront de préférence équirépartis en azimut autour de l'axe central Z3.

Par volonté de standardisation, les rayons 5 seront de préférence tous identiques les uns aux autres.

Il en ira de préférence de même pour les sous-ensembles presseurs 10, qui seront dupliqués à l'identique les uns des autres de sorte à former des modules interchangeables entre eux.

A titre indicatif, on pourra prévoir entre 30 et 80 rayons 5, par exemple 64 rayons 5, et donc autant de sous-ensembles presseurs 10, notamment pour un moyeu 3 dont le diamètre correspond à celui d'une jante de 12 pouces à 24 pouces.

Tel que cela est notamment visible sur les figures 3, 4 et 5, les sous-ensembles presseurs 10 comportent chacun au moins un poussoir 11, 12 agencé pour presser l'un des premier et second pieds 6, 7 du rayon 5 concerné contre la face réceptrice 3E, 4I du moyeu 3 ou respectivement de la bande annulaire périphérique 4 qui correspond audit pied 6, 7 du rayon 5.

Les poussoirs 11, 12 sont de préférence formés par des barres rigides rectilignes, de préférence métalliques.

Lesdits poussoirs 11, 12 s'étendent de préférence parallèlement à l'axe central Z3, sur une longueur préférentiellement au moins égale à 30%, de préférence au moins égale à 50%, voire à 70% de la longueur axiale des pieds 6, 7, afin d'avoir une bonne assise contre lesdits pieds 6, 7.

De préférence, la longueur axiale de chaque poussoir 11, 12, et plus particulièrement la longueur axiale du premier poussoir 11, radialement interne, n'excédera pas la longueur axiale du pied 6, 7 correspondant. Ceci permettra d'éviter toute interférence entre le poussoir 11, 12 et la face réceptrice 3E, 4I correspondante, notamment ici entre le premier poussoir 11 et la face réceptrice 3E du moyeu 3. Ceci permettra également de rendre un même ensemble presseur 10, et plus globalement un même dispositif 1, compatible avec l'assemblage de plusieurs dimensions de rayons 5, et plus globalement avec l'assemblage de plusieurs dimensions axiales de bandages 2.

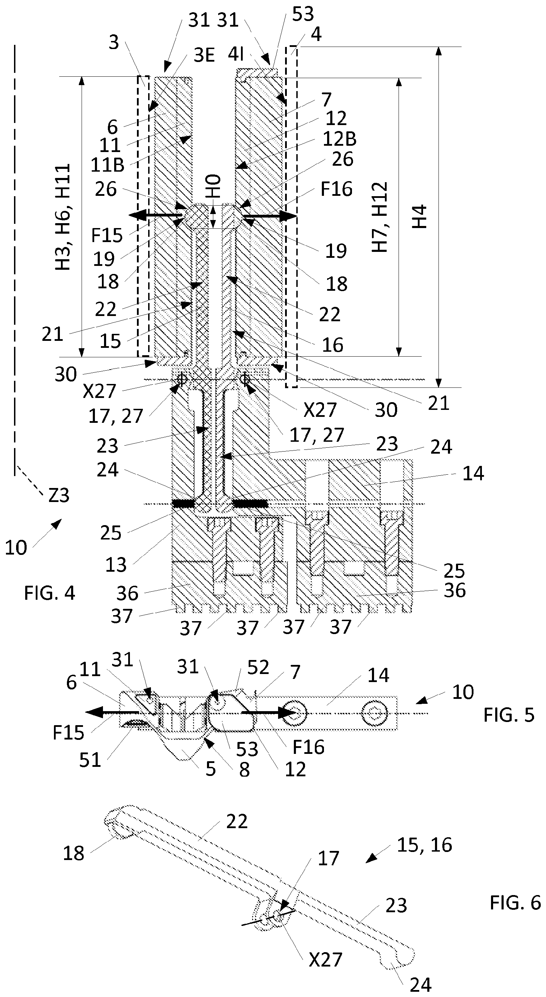

Les poussoirs 11, 12 présenteront de préférence une section transverse de forme conjuguée à celle des pieds 6, 7 correspondants, ici par exemple une section sensiblement triangulaire dont l'un des côtés épouse la pente de la branche de la portion centrale 8 en V du rayon 5, ainsi que la face du pied qui forme le prolongement de ladite pente, tel que cela est visible sur la figure 5.

Tel que cela est visible sur la figure 5, chaque poussoir 11, 12 pourra avantageusement être associé à une bride 51, 52, qui est retenue audit poussoir 11, 12 par un ou plusieurs connecteurs 53, et qui permet au poussoir 11, 12 d'assurer une prise sur le pied 6, 7 de chaque côté de la branche qui rattache ledit pied à la portion centrale 8 du rayon 5, de sorte à éviter tout basculement ou toute perte de contrôle de la trajectoire du pied 6, 7 lors du déplacement radial du poussoir 11, 12.

Selon l'invention, chacun des sous-ensembles presseurs 10 comprend au moins un curseur 13, 14 qui est monté mobile radialement par rapport à l'axe central Z3, sous la dépendance d'un système d'entraînement 20, et qui porte un levier 15, 16 qui s'étend depuis un point d'ancrage 17, par lequel ledit levier 15, 16 est solidarisé avec le curseur 13, 14, jusqu'à un organe d'appui 18 qui se situe axialement à distance du point d'ancrage 17 selon l'axe central Z3, et par lequel ledit levier 15, 16 vient en appui contre ledit poussoir 11, 12 dans une aire de contact 19 qui d'une part se situe au dos 11B, 12B dudit poussoir 11, 12, à l'opposé radialement du pied 6, 7 et de la face réceptrice 3E, 4I, et qui d'autre part est contenue dans la plage axiale H6, H7 que vient occuper le pied 6, 7 concerné le long de l'axe central Z3, de sorte que, lorsque le système d'entraînement 20 déplace radialement le curseur 13, 14, le levier 15, 16 embarqué sur ledit curseur 13, 14 d'une part transmet au poussoir 11, 12, par l'intermédiaire de l'organe d'appui 18, un effort de serrage F15, F16 qui presse ledit poussoir 11, 12, et par conséquent le pied 6, 7 du rayon 5, à l'encontre de la face réceptrice 3E, 4I, et d'autre part assure, à la manière d'un ressort, par la capacité de flexion élastique dudit levier 15, 16, une suspension radiale élastique du poussoir 11, 12 vis-à-vis du curseur 13, 14 et donc à l'encontre du pied 6, 7 du rayon 5 et de la face réceptrice 3E, 4I.

Comme indiqué plus haut, la souplesse procurée par le levier 15, 16, qui agit comme un ressort interposé entre le curseur 13, 14 et le poussoir 11, 12, permet à chaque poussoir 11, 12 d'adapter au cas par cas son déplacement radial et de réguler l'intensité de l'effort de serrage F15, F16 que ledit poussoir 11, 12 applique au pied du rayon 6, 7, en fonction de l'agencement et des réactions du rayon 5 concerné et de la face réceptrice 3E, 4I correspondante.

On s'assure ainsi notamment que le pied 6, 7 de chacun des rayons 5, qui se retrouve pris et comprimé radialement entre le poussoir 11, 12 et la face réceptrice 3E, 4I, est convenablement positionné et qu'il est soumis à un effort de serrage F15, F16 qui est suffisamment élevé pour garantir une bonne adhésion dudit pied 6, 7 sur la face réceptrice 3E, 4I, mais sans pour autant dépasser un seuil d'intensité qui serait dommageable au rayon 5 ou à ladite face réceptrice 3E, 4I.

Par « plage axiale » ou « étendue axiale » d'un élément, ici par exemple la plage axiale H6, H7 du pied 6, 7 du rayon, on désigne l'étendue comprise, le long de l'axe central Z3, entre deux plans fictifs qui sont normaux audit axe central Z3 et qui viennent tangenter les extrémités axiales de l'élément considéré. De manière équivalente, la « plage axiale » désigne ainsi le segment de l'axe central Z3 qui correspond à la projection orthogonale de l'élément concerné sur ledit axe central Z3.

On notera que, pour prendre une bonne assise sur le moyeu 3 et pour soutenir efficacement la bande annulaire périphérique 4, les rayons 5, et plus particulièrement les pieds 6, 7 desdits rayons 5, présenteront de préférence une étendue axiale H6, H7 qui représente entre 70 % et 105 % de l'étendue axiale H3 du moyeu 3, et/ou, alternativement ou cumulativement avec le critère précédent, entre 70 % et 100 % de l'étendue axiale H4 de la bande annulaire périphérique 4.

Par « dos » 11B, 12B du poussoir 11, 12, on désigne une face du poussoir qui se situe radialement à l'opposé de la face « avant » dudit poussoir 11, 12 par laquelle ledit poussoir 11, 12 appuie contre le pied 6, 7 et peut ainsi comprimer le pied 6, 7 contre la face réceptrice 3E, 4I.

Avantageusement, dans la mesure où l'organe d'appui 18 du levier 15, 16 agit au dos 11B, 12B du poussoir 11, 12 dans une position axiale qui se situe en vis-à-vis de la plage axiale H6, H7 occupée par le pied 6, 7 du rayon, et plus préférentiellement dans la mesure où l'organe d'appui 18 du levier 15, 16 agit au dos 11B, 12B du poussoir dans une position axiale qui est sensiblement centrée sur la plage axiale H6, H7 occupée par le pied 6, 7, alors le poussoir 11, 12 est particulièrement stable et l'effort de serrage bien réparti par ledit poussoir 11, 12 sur toute la plage axiale H6, H7 du pied 6, 7.

Par commodité de compacité et de conception, le levier 15, 16 se présente de préférence sous forme d'une tige ou d'une lame formant une antenne en saillie axiale par rapport au curseur 13, 14, et plus particulièrement par rapport au point d'ancrage 17, et dont la direction longitudinale est de préférence sensiblement parallèle à l'axe central Z3, et plus particulièrement dont la déviation angulaire par rapport audit axe central Z3 est inférieure ou égale à 10 degrés, voire inférieure ou égale à 5 degrés, aussi bien initialement que lors des déplacements radiaux du curseur 13, 14.

La forme et le matériau constitutif du levier 15, 16 seront bien entendu choisis de manière à conférer au levier la résistance mécanique et la raideur en flexion adaptées.

A titre indicatif, le levier 15, 16 pourra être formé en acier possédant des propriétés élastiques adaptées, par exemple en acier au silicium, ou bien dans un matériau composite par exemple à base de fibres de carbone imprégnées d'une résine époxy. La forme et la finesse desdits matériaux seront choisies pour conférer audit levier 15, 16 la souplesse et la raideur requises en flexion.

Un interstice radial 21 sera prévu entre le dos 11B, 12B du poussoir 11, 12 et le corps du levier 15, 16 compris entre le point d'ancrage 17 et l'organe d'appui 18, de sorte à autoriser les mouvements de basculement et de flexion dudit levier 15, 16 en évitant toute interférence dudit levier 15, 16 avec le dos 11B, 12B du poussoir, excepté bien sûr le contact intentionnel entre l'organe d'appui 18 et le dos 11B, 12B du poussoir qui s'opère dans l'aire de contact 19 prévue à cet effet.

A ce titre, l'organe d'appui 18 formera de préférence une protubérance qui s'étend en saillie radiale par rapport au corps du levier 15, 16, en direction du dos 11B, 12B du poussoir 11, 12, de sorte que le corps du levier 15, 16 puisse rester à l'écart du dos du poussoir 11B, 12B lorsque ledit organe d'appui 18 est au contact dudit dos 11B, 12B du poussoir.

Dans l'absolu, on pourrait envisager que le levier 15, 16 soit fixé au dos 11B, 12B du poussoir, voire soit formé d'un seul tenant avec le poussoir 11, 12, au niveau du point d'appui 18, et raccordé au curseur 13, 14 par le point d'ancrage 17, pourvu que l'agencement du levier 15, 16 permette de remplir les fonctions de transmission d'effort de serrage F15, 16 radial et de suspension élastique.

Cependant, de façon préférentielle, et notamment pour simplifier la fabrication des poussoirs 11, 12, le levier 15, 16 est distinct du poussoir 11, 12.

De préférence, et tel que cela est notamment visible sur les figures 3, 4 et 6, l'organe d'appui 18 présente, dans un plan radial contenant l'axe central Z3, un profil arrondi, de préférence en arc de cercle, qui permet audit organe d'appui 18 de rouler sur le dos 11B, 12B du poussoir 11, 12, pour accommoder les variations d'orientation du levier 15, 16 par rapport au dos 11B, 12B du poussoir lorsque le levier 15, 16 bascule et/ou se déforme en flexion.

L'organe d'appui 18 pourra être formé par exemple par un galet monté sur le corps du levier, ou bien par un patin qui est fixé sur le levier 15, 16 voire formé d'un seul tenant avec le corps du levier 15, 16.

Le dos 11B, 12B du poussoir pourra de préférence présenter un logement 26 formant un berceau incurvé, ici concave, destiné à accueillir l'organe d'appui 18, ici convexe, comme cela est illustré sur lafigure 4, ce qui permettra notamment de répartir plus aisément l'aire de contact 19 sur un secteur relativement étendu du profil arrondi de l'organe d'appui 18 d'une part, et dudit berceau 26 d'autre part, et donc de transmettre un effort de serrage F15, F16 relativement élevé au poussoir 11, 12 sans endommager ni fatiguer le levier 15, 16 ou le poussoir 11, 12.

Dans l'absolu, on pourrait envisager que le point d'ancrage 17 forme un encastrement, qui supprime tout degré de liberté entre le levier 15, 16 et le curseur 13, 14. Les débattements du levier 15, 16 nécessaires à la suspension élastique du poussoir 11, 12 serait alors assurés exclusivement par la déformation du levier.

Toutefois, de préférence, tel que cela est visible sur les figures 3, 4 et 6, le point d'ancrage 17 est formé par une liaison pivot 27, dont l'axe X27 est orthoradial par rapport à l'axe central Z3.

Par « orthoradiale », on désigne une direction qui est à la fois perpendiculaire à un rayon issu de l'axe central Z3 et contenue dans plan normal audit axe central Z3, c'est-à-dire, de manière équivalente, une direction qui est normale à un plan radial qui contient l'axe central Z3 (et qui passe par le point considéré).

Avantageusement, la mise en œuvre d'une liaison pivot 27 au point d'ancrage 17, ici à une position fixe sur le curseur 13, 14, permet au levier 15, 16 de basculer librement par rapport au curseur 13, 14, et ainsi d'accompagner la flexion élastique en évitant une concentration excessive de contraintes au niveau du point d'ancrage 17.

Un autre avantage de la liaison pivot 27 est de permettre la mise en œuvre d'un levier 15, 16 qui, de préférence, comprend une première branche 22 qui s'étend d'un côté par rapport à l'axe X27 de la liaison pivot 27, afin de relier le point d'ancrage 17 à l'organe d'appui 18, et une seconde branche 23 qui s'étend du côté opposé par rapport à l'axe X27 de la liaison pivot 27 afin de relier le point d'ancrage 17 à un organe d'arrêt 24 agencé pour venir en appui contre le curseur 13, 14.

Le levier 15, 16 peut ainsi se présenter sous la forme d'un culbuteur.

La seconde branche 23 peut avantageusement contribuer, par sa flexibilité intrinsèque, à l'effet ressort du levier 15, 16.

A ce titre, on pourra éventuellement prévoir que la seconde branche 23 présente un module quadratique inférieur au module quadratique de la première branche 22, et donc une résistance à la flexion moindre que celle de la première branche 22, de sorte que la déformation élastique assurant la suspension du poussoir 11, 12 soit principalement supportée par ladite seconde branche 23.

En faisant supporter principalement la déformation en flexion du levier 15, 16 par la seconde branche 23, ici la branche inférieure sur les figures 3 et 4, c'est-à-dire en choisissant une seconde branche 23 relativement flexible, tandis que l'on conserve une première branche 22 relativement rigide et donc peu déformable en flexion, on peut d'une part conférer au levier 15, 16 une raideur radiale apparente qui est relativement faible, grâce à la flexibilité de la seconde branche 23, et donc conférer une bonne souplesse à la suspension radiale élastique du poussoir 11, 12, et d'autre part disposer d'une course radiale relativement importante pour la première branche 22, ici la branche supérieure, peu déformable, et donc pour le curseur 13, 14, sans risquer de voir la première branche 22 se déformer excessivement au point d'interférer avec la base inférieure du poussoir 11, 12 lors des déplacements radiaux du curseur 13, 14.

Le choix du rapport entre d'une part la longueur du bras de levier que procure la seconde branche 23 entre l'axe X27 de la liaison pivot 27 et l'organe d'arrêt 24 et d'autre part la longueur du bras de levier que procure la première branche 22 entre ledit axe X27 de la liaison pivot 27 et l'organe d'appui 18 permettra de fixer les conditions de renvoi d'effort et de renvoi de course angulaire entre l'organe d'arrêt 24 et l'organe d'appui 18.

De préférence, l'organe d'arrêt 24 vient en appui contre une butée ajustable 25, telle qu'un pointeau à vis, qui est portée par le curseur 13, 14.

Une telle butée ajustable 25 permet avantageusement de régler la position de fin de course en basculement du levier 15, 16, et par conséquent l'inclinaison initiale du levier 15, 16 et/ou la précontrainte éventuelle de l'organe d'appui 18 à l'encontre du poussoir 11, 12. Le réglage de l'inclinaison initiale du levier 1, 16 permettra notamment d'anticiper et d'éviter toute interférence du levier 15, 16 avec la base inférieure du poussoir 11, 12 lors du mouvement radial du curseur 13, 14.

De préférence, l'aire de contact 19 qui existe entre l'organe d'appui 18 du levier 15, 16 et le dos 11B, 12B du poussoir est strictement contenue dans une plage axiale H0 dite « plage axiale centrale » H0 qui est centrée sur la plage axiale H11, H12 occupée par le poussoir 11, 12, et dont l'étendue axiale représente moins de 40%, de préférence moins de 20%, voire moins de 15% de l'étendue de ladite plage axiale H11, H12 occupée par le poussoir 11, 12.

L'aire de contact 19, située à distance du point d'ancrage 17, occupe ainsi une étendue axiale relativement réduite qui est, et reste lors des mouvements radiaux du curseur 13, 14 et du poussoir 11, 12, contenue dans la plage axiale centrale H0 et donc, surtout, qui est et reste sensiblement centrée sur la plage axiale H11, H12 occupée par le poussoir 11, 12, et par conséquent sensiblement centrée sur la plage axiale H6, H7 qui sera occupée par le pied 6, 7 lorsque ledit poussoir 11, 12 agira sur le pied 6, 7 pour appliquer l'effort de serrage F15, F16.

En appliquant l'effort de serrage F15, F16 sensiblement au milieu du poussoir 11, 12, c'est-à-dire sensiblement à la moitié de la longueur dudit poussoir 11, 12, le levier 15, 16 permet de contraindre le poussoir 11, 12, et donc le pied 6, 7 du rayon, de façon relativement équilibrée, et de déplacer radialement le poussoir 11, 12 sans causer de basculement prononcé dudit poussoir 11, 12 par rapport à l'axe central Z3 ni de blocage par arc-boutement dudit poussoir 11, 12.

De préférence, le poussoir 11, 12 est guidé radialement par un premier guide 30 situé à une première extrémité axiale dudit poussoir 11, 12 et par un second guide 31 qui est distinct du premier guide 30 et situé à une seconde extrémité axiale dudit poussoir 11, 12 opposée à la première extrémité, de sorte que l'aire de contact 19 entre l'organe d'appui 18 et le dos 11B, 12B du poussoir se situe entre lesdits premier et second guides 30, 31, à distance desdits guides 30, 31, de préférence à équidistance desdits guides 30, 31.

Avantageusement, un tel guidage double, par des guides 30, 31 qui se situent axialement de part et d'autre de l'aire de contact 19, et donc de part et d'autre du point d'application de l'effort de serrage F15, F16 au niveau duquel l'organe d'appui 18 du levier agit sur le poussoir 11, 12, procure avantageusement un guidage précis et stable qui évite tout basculement et tout coincement du poussoir 11, 12 par arc-boutement lors des déplacements radiaux dudit poussoir 11, 12, bien que l'effort fourni par le levier 15, 16 soit localisé dans une aire de contact 19 étroite.

A titre d'exemple, le premier guide 30 et le second guide 31 pourront comprendre des doigts qui font saillie axialement aux extrémités du poussoir 11, 12, plus particulièrement sur les connecteurs 53 qui assurent la fixation des brides 51, 52 sur les poussoirs 11, 12, lesdits doigts étant alors guidés dans des rainures sensiblement radiales prévues dans des premier et second plateaux annulaires (non représentés) qui sont centrés sur l'axe central Z3 et qui s'étendent selon des plans normaux à l'axe central Z3, de part et d'autre axialement des poussoirs 11, 12.

De préférence, le poussoir 11, 12 est mû par un levier 15, 16 unique dont le point d'ancrage 17 est situé axialement hors de la plage axiale H11, H12 occupée par le poussoir 11, 12.

On notera à ce titre que le point d'ancrage du levier 15, 16 reste avantageusement, lors des déplacements radiaux du curseur 13, 14, du poussoir 11, 12, et donc du levier 15, 16, situé hors de la plage axiale H11, H12 occupée par le poussoir 11, 12.

Plus globalement, le curseur 13, 14 correspondant est, et reste, de préférence situé axialement hors de la plage axiale H11, H12 occupée par le poussoir 11, 12, ici en-dessous de ladite plage axiale H11, H12 occupée par le poussoir 11, 12 sur les figures 3 et 4.

De même, le point d'ancrage 17, et le curseur 13, 14 correspondant, sont et restent situés axialement hors de la plage axiale H6, H7 occupée par le pied 6, 7, ici de préférence en-dessous de ladite plage axiale.

De la sorte, l'agencement selon l'invention permet avantageusement de déporter le curseur 13, 14, et plus globalement le système d'entraînement 20, axialement au-delà des poussoirs 11, 12, et des pieds 6, 7, voire de préférence de regrouper d'un seul et même côté des poussoirs 11, 12, selon la direction axiale, les différents curseurs 13, 14 d'un même sous-ensemble presseur 10, et plus préférentiellement les différents curseurs 13, 14 de la totalité des sous-ensembles presseurs 10, ainsi que, de préférence, le système d'entraînement 20. Ici, on pourra ainsi de préférence positionner les curseurs 13, 14 et le système d'entraînement en-dessous de la zone occupée par les poussoirs 11, 12 et par le moyeu 3 ainsi que la bande annulaire périphérique 4.

Le dispositif d'assemblage 1 présente ainsi une bonne compacité et une faible inertie thermique, tandis que le système d'entraînement 20 requiert un nombre relativement réduit de pièces et de moteurs pour animer la totalité des sous-ensembles presseurs 10.

De préférence, au moins une partie, et de préférence la totalité, des sous-ensembles presseurs 10 comprennent chacun, tel que cela est visible sur les figures 3 et 4, un premier curseur 13 qui porte un premier levier 15 qui vient en appui contre le dos 11B d'un premier poussoir 11 agencé pour presser contre le moyeu 3 le premier pied 6 du rayon 5 concerné, et un second curseur 14 qui porte un second levier 16 qui vient en appui contre le dos 12B d'un second poussoir 12 agencé pour presser le second pied 6 dudit rayon 5 contre la bande annulaire périphérique 4.

Ainsi, chaque sous-ensemble presseur 10 comprend de préférence une paire de poussoirs 11, 12 antagonistes, et une paire de curseurs 13, 14 antagonistes correspondants, pour pouvoir gérer les deux pieds 6, 7 d'un même rayon 5, c'est-à-dire la totalité des pieds 6, 7 d'un même rayon 5, et pouvoir ainsi assurer la fixation du rayon 5 aussi bien au moyeu 3 qu'à la bande annulaire périphérique 4.

Ceci procure une grande stabilité et une bonne efficacité aux sous-ensembles presseurs 10, et plus globalement au dispositif 1.

Avantageusement, les premier et second leviers 15, 16, et plus particulièrement les premières branches 22 desdits premier et second leviers, ainsi que les interstices radiaux 21 correspondants, s'étendent dans l'espace libre qui est compris radialement entre les dos 11B, 12B des deux poussoirs 11, 12, tel que cela est bien visible sur la figure 4.

Les premier et second curseur 13, 14 d'un même sous-ensemble presseur 10, et plus globalement l'ensemble des curseurs 13, 14 de la totalité des sous-ensembles presseurs 10, se situent de préférence axialement d'un seul et même côté par rapport aux poussoirs 11, 12, afin de simplifier la structure du système d'entraînement 20 et d'en réduire l'encombrement.

De préférence, le premier curseur 13 et le second curseur 14 d'un même sous-ensemble presseur 10 sont alignés radialement l'un avec l'autre, et occupent ainsi un seul et même secteur angulaire en azimut autour de l'axe central Z3, tel que cela est visible sur les figures 3, 4, 7 et 10. Il en va de même pour les leviers 15, 16 embarqués par lesdits curseurs 13, 14.

Les efforts radiaux exercés par lesdits curseurs 13, 14 sur un même rayon 5 seront ainsi de préférence sensiblement alignés, ce qui évitera notamment de créer un couple de lacet qui aurait tendance à déformer le rayon 5 en torsion ou à modifier l'orientation du rayon 5, et donc la position des pieds 6, 7, par rotation en lacet autour de la direction axiale d'extension dudit rayon 5.

De préférence, le système d'entraînement 20 est conçu de manière à pouvoir sélectivement générer soit un déplacement simultané du premier curseur 13 et du second curseur 14 à l'encontre respectivement du premier pied 6 du rayon 5 et du second pied 7 du rayon 5, soit un déplacement séparé desdits premier et second curseurs 13, 14, l'un après l'autre.

Un déplacement simultané permet notamment d'équilibrer les efforts d'extension radiale auquel est soumis le rayon 5 et de réaliser la fixation des deux pieds 6, 7 en une seule étape, ce qui permet de minimiser le temps de cycle de fabrication du bandage 2.

Dans certaines circonstances, un déplacement séparé dans le temps peut toutefois être préférable. Cela pourra par exemple être le cas lorsque les deux pieds 6, 7 d'un même rayon 5 présentent une géométrie et/ou une raideur nettement différente l'un de l'autre et nécessitent donc une précharge différente pour arriver dans de bonnes conditions à leur point de contact avec leur face réceptrice 3E, 4I respective.

On notera que dans tous les cas, c'est-à-dire que l'on plaque simultanément ou bien l'un après l'autre les deux pieds 6, 7 de chaque rayon 5 contre le moyeu 3 et respectivement contre la bande annulaire périphérique 4, on pourra préalablement enduire de colle, par exemple d'une colle polyuréthane bi-composant, la face réceptrice 3E du moyeu 3, respectivement la face réceptrice 4I de la bande annulaire périphérique 4, avant de presser les pieds 6, 7 contre lesdites faces réceptrices, puis ensuite procéder, tout en conservant la contrainte de compression radiale desdits pieds 6, 7 contre lesdites faces réceptrices 3E, 4I, à une opération de cuisson pour polymériser la colle. Avantageusement, une fixation simultanée des deux pieds 6, 7 permettra de réaliser une seule étape de cuisson au lieu de deux étapes de cuisson successives.

Le système d'entraînement 20 comprendra de préférence un moteur, ou plus préférentiellement plusieurs moteurs, par exemple des moteurs électriques, qui permettent de générer le déplacement radial des curseurs 13, 14. Ces moteurs seront de préférence pilotés par une unité de commande électronique, permettant de sélectionner entre mouvements simultanés et mouvements séparés.

On notera que, notamment pour pouvoir mettre en œuvre une structure de leviers compacte et au fonctionnement fiable dans un espace restreint, le système d'entraînement 20 est de préférence agencé pour déplacer le curseur 13, 14, et exercer un effort de traction radiale sur ledit curseur, dans le même sens que celui selon lequel le poussoir 11, 12 correspondant vient presser le pied 6, 7 du rayon 5 contre la face réceptrice 3E, 4I. Ainsi, le premier curseur 13, radialement interne, qui agit sur le premier pied 6 pour exercer un effort de serrage F15 radial centripète, sera sollicité et déplacé par le système d'entraînement 20 selon une direction radiale centripète. A l'inverse, le second curseur 14, qui agit sur le second pied 7 pour exercer un effort de serrage F16 radial centrifuge, sera sollicité et déplacé par le système d'entraînement 20 selon une direction radiale centrifuge.

De préférence, le dispositif d'assemblage 1 comprend un système d'entraînement 20 partagé, commun à plusieurs des sous-ensembles presseurs 10, et de préférence commun à tous les sous-ensembles presseurs 10.

On peut ainsi commander aisément, et au moyen d'un système d'entraînement 20 compact et économe, les déplacements des curseurs 13, 14.

Avantageusement, le système d'entraînement 20 est de préférence conçu de manière à imposer simultanément à tous les premiers curseurs 13 qu'il commande un déplacement radial (ici notamment un déplacement radial centripète) de même amplitude. On peut ainsi maîtriser parfaitement, pour chaque rayon 5, le déplacement individuel du curseur 13, et donc garantir la simultanéité et l'homogénéité du déplacement radial des premiers curseurs, et donc des premiers poussoirs 11 correspondants, et par conséquent le positionnement et la mise en compression convenables de tous les premiers pieds 6 contre le moyeu 3. On évite ainsi notamment un chevauchement indésirable desdits pieds 6.

De même, le système d'entraînement 20 est de préférence conçu de manière à imposer simultanément à tous les seconds curseurs 14 qu'il commande un déplacement radial, ici notamment un déplacement radial centrifuge, de même amplitude. Ceci assure la simultanéité et l'homogénéité du déplacement des seconds poussoirs 12, et donc le positionnement et la mise en compression convenables des seconds pieds 7 contre la bande périphérique annulaire 4.

De préférence, ledit système d'entraînement 20 partagé comprend une couronne 32, 33 qui est pourvue d'un guide spiral 34. Ladite couronne 32, 33 est centrée sur l'axe central Z3 et montée en rotation autour de l'axe central Z3, et coopère avec un curseur 13, 14 de chacun desdits sous-ensembles presseurs 10 concernés afin de convertir un mouvement de rotation de ladite couronne 32, 33 en un mouvement de translation radiale dudit curseur 13, 14.

Le guide spiral 34 pourra être formé par un rail spiral en saillie axiale sur une face de la couronne 32, 33 qui est normale à l'axe central Z3 et qui est orientée vers les curseurs 13, 14, ou bien par une rainure spirale creusée depuis la surface apparente de ladite face.

La couronne 32, 33 présente de préférence une denture 32T, 33T sur laquelle engrène un pignon entraîné par l'un des moteurs susmentionnés.

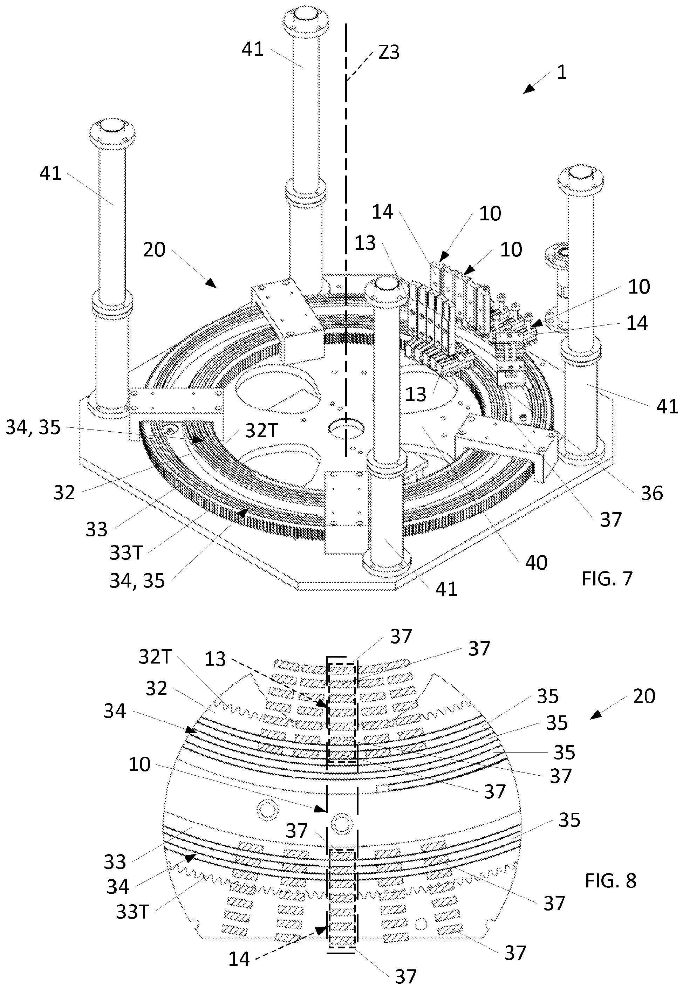

De préférence, et tel que cela est visible sur les figures 7 et 8, le guide spiral 34 forme une pluralité de spires de guidage 35 concentriques, et le curseur 13, 14 possède une semelle 36 pourvue d'une pluralité de pattes d'emboîtement 37 de forme conjuguée aux spires de guidage 35 et qui sont décalées radialement les unes par rapport aux autres de sorte à coopérer avec ladite pluralité de spires de guidage 35 concentriques.

Avantageusement, un tel système de guidage et de transmission multi-pistes, selon lequel, dans un même secteur angulaire autour de l'axe central Z3, les pattes d'emboîtement 37 d'un même curseur 13, 14 engagent simultanément une série de portions de spires de guidage 35 réparties radialement, permet de réaliser un guidage des curseurs 13, 14 et une transmission d'effort de la couronne 32, 33 au curseur 13, 14 particulièrement robustes et stables.

Les spires de guidage 35 concentriques pourront être formées, comme indiqué ci-dessus, par des éléments mâles tels qu'un ou plusieurs rails spiraux concentriques, de préférence un même rail spiral continu qui s'enroule sur plusieurs tours autour de l'axe central Z3, ou bien, par des éléments femelles, tels que, selon une variante particulièrement préférentielle correspondant à celle illustrée sur les figures 6 et 7, une ou plusieurs rainures qui sont creusées dans la couronne, de préférence une seule et même rainure spirale qui s'enroule sur plusieurs tours autour de l'axe central Z3.

Lorsque les spires de guidage 35 sont formées par une ou des rainures femelles, les pattes d'emboîtement prennent de préférence la forme complémentaire de languettes mâles, tel que cela est visible sur les figures 4, 7 et 8.

De préférence, le système d'entraînement 20 comprend au moins une première couronne 32 pourvue d'un guide spiral 34, laquelle première couronne 32 est montée en rotation autour de l'axe central Z3 et coopère simultanément avec les premiers curseurs 13 des différents sous-ensembles presseurs 10 concernés, de préférence de la totalité des sous-ensembles presseurs 10, pour convertir un mouvement de rotation de ladite première couronne 32 en un mouvement de translation radiale desdits premiers curseurs 13, et une seconde couronne 33 pourvue d'un guide spiral 34, laquelle seconde couronne 33 est montée en rotation autour de l'axe central Z3, et coaxiale à la première couronne 32, et coopère simultanément avec les seconds curseurs 14 desdits différents sous-ensembles presseurs 10 pour convertir un mouvement de rotation de ladite seconde couronne 33 en un mouvement de translation radiale desdits seconds curseurs 14.

De préférence, la première couronne 32 et la seconde couronne 33 sont sensiblement coplanaires, et normales à l'axe central Z3, ce qui permet une réalisation très compacte du système d'entraînement 20.

Avantageusement, selon que l'on active la première couronne 32, la seconde couronne 33, ou les deux couronnes 32, 33, on déplace respectivement le jeu des premiers curseurs 13, ou le jeu des seconds curseurs 14, ou bien les deux jeux de curseurs 13, 14 simultanément, et par conséquent on plaque respectivement les premiers pieds 6, les seconds pieds 7, ou l'ensemble des premier et second pieds 6, 7 des rayons 5 contre les surfaces réceptrices 3E, 4I correspondantes.

De préférence, tel que cela est illustré sur les figures 3 et 7, le dispositif d'assemblage 1 sera agencé de manière à ce que l'axe central Z3 soit vertical.

Le dispositif d'assemblage 1 pourra alors comprendre une embase 40 formant un plateau sensiblement horizontal agencé pour recevoir le moyeu 3, ainsi que les couronnes 32, 33, et sur lequel seront fixés des montants 41 verticaux, qui permettront notamment de fixer, au-dessus de l'embase 40 et parallèlement à ladite embase 40, à un premier étage, un premier plateau annulaire (non représenté) agencé pour recevoir la bande annulaire périphérique 4 et former les premiers guides 30 guidant les extrémités axiales inférieures des poussoirs 11, 12, lequel premier plateau annulaire sera ajouré en son centre pour laisser disponible l'espace nécessaire au passage du moyeu 3, des rayons 5 et des sous-ensembles presseurs 10, puis, à un étage supérieur, un second plateau annulaire (non représenté), voire un couvercle en forme de disque, agencé pour former les second guides 31 qui guident les extrémités axiales supérieures des poussoirs 11, 12.

## Revendications

1. Dispositif (1) d'assemblage destiné à la fabrication d'un bandage (2) qui comprend un moyeu (3) présentant un axe central (Z3), une bande annulaire périphérique (4) coaxiale au moyeu (3), et une pluralité de rayons (5) qui relient le moyeu (3) à la bande annulaire périphérique (4) et qui comprennent à cet effet chacun un premier pied (6) fixé sur une face radialement externe (3E) dudit moyeu (3) formant une première face réceptrice (3E) et un second pied (7) fixé sur une face radialement interne (4I) de ladite bande annulaire périphérique (4) formant une seconde face réceptrice (4I), ledit dispositif d'assemblage (1) comprenant une pluralité de sous-ensembles presseurs (10) qui sont affectés chacun à la fixation d'un rayon (5) distinct et qui comportent chacun au moins un poussoir (11, 12) agencé pour presser l'un des premier et second pieds (6, 7) du rayon (5) concerné contre la face réceptrice (3E, 4I) du moyeu (3) ou respectivement de la bande annulaire périphérique (4) qui correspond audit pied (6, 7) du rayon, ledit dispositif d'assemblage étant **caractérisé en ce que** chacun desdits sous-ensembles presseurs (10) comprend au moins un curseur (13, 14) qui est monté mobile radialement par rapport à l'axe central (Z3), sous la dépendance d'un système d'entraînement (20), et qui porte un levier (15, 16) qui s'étend depuis un point d'ancrage (17), par lequel ledit levier (15, 16) est solidarisé avec le curseur (13, 14), jusqu'à un organe d'appui (18) qui se situe axialement à distance du point d'ancrage (17) selon l'axe central (Z3), et par lequel ledit levier (15, 16) vient en appui contre ledit poussoir (11, 12) dans une aire de contact (19) qui d'une part se situe au dos (11B, 12B) dudit poussoir, à l'opposé radialement du pied (6, 7) et de la face réceptrice (3E, 4I), et qui d'autre part est contenue dans la plage axiale (H6, H7) que vient occuper le pied (6, 7) concerné le long de l'axe central (Z3), de sorte que, lorsque le système d'entraînement (20) déplace radialement le curseur (13, 14), le levier (15, 16) embarqué sur ledit curseur d'une part transmet au poussoir (11, 12), par l'intermédiaire de l'organe d'appui (18), un effort de serrage (F15, F16) qui presse ledit poussoir (11, 12), et par conséquent le pied (6, 7) du rayon, à l'encontre de la face réceptrice (3E, 4I), et d'autre part assure, à la manière d'un ressort, par la capacité de flexion élastique dudit levier (15, 16), une suspension radiale élastique du poussoir (11, 12) vis-à-vis du curseur (13, 14) et donc à l'encontre du pied (6, 7) du rayon et de la face réceptrice (3E, 4I).

2. Dispositif selon la revendication 1 **caractérisé en ce que** le levier (15, 16) est distinct du poussoir (11, 12) et **en ce que** l'organe d'appui (18) présente, dans un plan radial contenant l'axe central (Z3), un profil arrondi, de préférence en arc de cercle, qui permet audit organe d'appui (18) de rouler sur le dos (11B, 12B) du poussoir, pour accommoder les variations d'orientation du levier (15, 16) par rapport au dos (11B, 12B) du poussoir lorsque le levier (15, 16) bascule et/ou se déforme en flexion.

3. Dispositif selon la revendication 1 ou 2 **caractérisé en ce que** le point d'ancrage (17) est formé par une liaison pivot (27) dont l'axe (X27) est orthoradial par rapport à l'axe central (Z3).

4. Dispositif selon la revendication 3 **caractérisé en ce que** le levier (15, 16) comprend une première branche (22) qui s'étend d'un côté par rapport à l'axe (X27) de la liaison pivot (27), afin de relier le point d'ancrage (17) à l'organe d'appui (18), et une seconde branche (23) qui s'étend du côté opposé par rapport à l'axe (X27) de la liaison pivot (27) afin de relier le point d'ancrage (17) à un organe d'arrêt (24) qui est agencé pour venir en appui contre le curseur (13, 14), contre une butée ajustable (25), telle qu'un pointeau à vis, qui est portée par le curseur (13, 14).

5. Dispositif selon l'une des revendications précédentes **caractérisé en ce que** l'aire de contact (19) qui existe entre l'organe d'appui (18) du levier (15, 16) et le dos (11B, 12B) du poussoir est strictement contenue dans une plage axiale (H0) dite « plage axiale centrale » qui est centrée sur la plage axiale (H11, H12) occupée par le poussoir (11, 12), et dont l'étendue axiale représente moins de 40%, de préférence moins de 20%, voire moins de 15% de l'étendue de ladite plage axiale (H11, H12) occupée par le poussoir (11, 12).

6. Dispositif selon l'une des revendications précédentes **caractérisé en ce que** le poussoir (11, 12) est guidé radialement par un premier guide (30) situé à une première extrémité axiale dudit poussoir (11, 12) et par un second guide (31) distinct du premier guide (30) et situé à une seconde extrémité axiale dudit poussoir (11, 12) opposée à la première extrémité, de sorte que l'aire de contact (19) entre l'organe d'appui (18) et le dos (11B, 12B) du poussoir se situe entre lesdits premier et second guides (30, 31), à distance desdits guides (30, 31), de préférence à équidistance desdits guides (30, 31).

7. Dispositif selon l'une des revendications précédentes **caractérisé en ce que** le poussoir (11, 12) est mû par un levier (15, 16) unique dont le point d'ancrage (17) est situé axialement hors de la plage axiale (H11, H12) occupée par le poussoir (11, 12).

8. Dispositif selon l'une des revendications précédentes **caractérisé en ce qu'**au moins une partie, et de préférence la totalité, des sous-ensembles presseurs (10) comprennent chacun un premier curseur (13) qui porte un premier levier (15) qui vient en appui contre le dos (11B) d'un premier poussoir (11) agencé pour presser contre le moyeu (3) le premier pied (6) du rayon (5) concerné, et un second curseur (14) qui porte un second levier (16) qui vient en appui contre le dos (12B) d'un second poussoir (12) agencé pour presser le second pied (7) dudit rayon (5) contre la bande annulaire périphérique (4).

9. Dispositif selon la revendication 8 **caractérisé en ce que** le système d'entraînement (20) est conçu de manière à pouvoir sélectivement générer soit un déplacement simultané du premier curseur (13) et du second curseur (14) à l'encontre respectivement du premier pied (6) du rayon (5) et du second pied (7) du rayon, soit un déplacement séparé desdits premier et second curseurs (13, 14), l'un après l'autre.

10. Dispositif selon l'une des revendications précédentes **caractérisé en ce qu'**il comprend un système d'entraînement (20) partagé, commun à plusieurs des sous-ensembles presseurs (10), et de préférence commun à tous les sous-ensembles presseurs (10), ledit système d'entraînement (20) partagé comprenant une couronne (32, 33) qui est pourvue d'un guide spiral (34), qui est centrée sur et montée en rotation autour de l'axe central (Z3), et qui coopère avec un curseur (13, 14) de chacun desdits sous-ensembles presseurs (10) concernés afin de convertir un mouvement de rotation de ladite couronne (32, 33) en un mouvement de translation radiale dudit curseur (13, 14).

11. Dispositif selon la revendication 10 **caractérisé en ce que** le guide spiral (34) forme une pluralité de spires de guidage (35) concentriques, et le curseur (13, 14) possède une semelle (36) pourvue d'une pluralité de pattes d'emboîtement (37) de forme conjuguée aux spires de guidage (35) et qui sont décalées radialement les unes par rapport aux autres de sorte à coopérer avec ladite pluralité de spires de guidage (35) concentriques.

12. Dispositif selon la revendication 8 et l'une des revendications 10 et 11 **caractérisé en ce que** le système d'entraînement (20) comprend au moins une première couronne (32) pourvue d'un guide spiral (34), laquelle première couronne (32) est montée en rotation autour de l'axe central (Z3) et coopère simultanément avec les premiers curseurs (13) des différents sous-ensembles presseurs (10) concernés, pour convertir un mouvement de rotation de ladite première couronne (32) en un mouvement de translation radiale desdits premiers curseurs (13), et une seconde couronne (33) pourvue d'un guide spiral (34), laquelle seconde couronne (33) est montée en rotation autour de l'axe central (Z3), et coaxiale à la première couronne (32), et coopère simultanément avec les seconds curseurs (14) desdits différents sous-ensembles presseurs (10) pour convertir un mouvement de rotation de ladite seconde couronne (33) en un mouvement de translation radiale desdits seconds curseurs (14).

13. Dispositif selon l'une des revendications précédentes **caractérisé en ce qu'**il comprend autant de sous-ensembles presseurs (10) répartis autour de l'axe central (Z3) qu'il y a de rayons (5) au sein du bandage (2).

## Patentansprüche

1. Vorrichtung (1) zur Montage, welche zur Herstellung eines Reifens (2) bestimmt ist, der eine Nabe (3), die eine Mittelachse (Z3) aufweist, einen ringförmigen Umfangsstreifen (4), der mit der Nabe (3) koaxial ist, und mehrere Speichen (5) umfasst, die die Nabe (3) mit dem ringförmigen Umfangsstreifen (4) verbinden und die zu diesem Zweck jeweils einen ersten Fuß (6), der an einer eine erste Aufnahmeseite (3E) bildenden radial äußeren Seite (3E) der Nabe (3) befestigt ist, und einen zweiten Fuß (7), der an einer eine zweite Aufnahmeseite (41) bildenden radial inneren Seite (41) des ringförmigen Umfangsstreifens (4) befestigt ist, umfassen, wobei die Montagevorrichtung (1) mehrere Andrückunterbaugruppen (10) umfasst, die jeweils der Befestigung einer anderen Speiche (5) zugeordnet sind und die jeweils mindestens ein Druckstück (11, 12) aufweisen, das dazu eingerichtet ist, einen von dem ersten und dem zweiten Fuß (6, 7) der betreffenden Speiche (5) gegen die Aufnahmeseite (3E, 4I) der Nabe (3) bzw. des ringförmigen Umfangsstreifens (4), die dem Fuß (6, 7) der Speiche entspricht, zu pressen, wobei die Montagevorrichtung **dadurch gekennzeichnet ist, dass** jede der Andrückunterbaugruppen (10) mindestens einen Schieber (13, 14) umfasst, der in Abhängigkeit von einem Antriebssystem (20) radial beweglich in Bezug auf die Mittelachse (Z3) gelagert ist und der einen Hebel (15, 16) trägt, der sich von einem Verankerungspunkt (17) aus, über den der Hebel (15, 16) mit dem Schieber (13, 14) fest verbunden ist, bis zu einem Stützelement (18) erstreckt, das sich entlang der Mittelachse (Z3) von dem Verankerungspunkt (17) axial entfernt befindet, und über den der Hebel (15, 16) an dem Druckstück (11, 12) in einer Kontaktfläche (19) zur Anlage kommt, die sich einerseits an der Rückseite (11B, 12B) des Druckstücks befindet, radial gegenüber dem Fuß (6, 7) und der Aufnahmeseite (3E, 4I), und die andererseits in dem axialen Bereich (H6, H7) enthalten ist, den der betreffende Fuß (6, 7) entlang der Mittelachse (Z3) einnimmt, derart, dass, wenn das Antriebssystem (20) den Schieber (13, 14) radial verlagert, der an dem Schieber angebrachte Hebel (15, 16) einerseits über das Stützelement (18) auf das Druckstück (11, 12) eine Spannkraft (F15, F16) überträgt, die das Druckstück (11, 12), und demzufolge den Fuß (6, 7) der Speiche, gegen die Aufnahmeseite (3E, 4I) presst, und andererseits, in der Art einer Feder, durch die elastische Biegefähigkeit des Hebels (15, 16) eine elastische radiale Aufhängung des Druckstücks (11, 12) gegenüber dem Schieber (13, 14) und damit auf den Fuß (6, 7) der Speiche und die Aufnahmeseite (3E, 4I) sicherstellt.

2. Vorrichtung nach Anspruch 1, **dadurch gekennzeichnet, dass** der Hebel (15, 16) von dem Druckstück (11, 12) verschieden ist, und dadurch, dass das Stützelement (18) in einer die Mittelachse (Z3) enthaltenden radialen Ebene ein gerundetes, vorzugsweise kreisbogenförmiges Profil aufweist, welches dem Stützelement (18) ermöglicht, auf der Rückseite (11B, 12B) des Druckstücks zu rollen, um sich an die Änderungen der Ausrichtung des Hebels (15, 16) in Bezug auf die Rückseite (11B, 12B) des Druckstücks anzupassen, wenn der Hebel (15, 16) schwenkt und/oder sich biegend verformt.

3. Vorrichtung nach Anspruch 1 oder 2, **dadurch gekennzeichnet, dass** der Verankerungspunkt (17) von einer Schwenkverbindung (27) gebildet wird, deren Achse (X27) orthoradial bezüglich der Mittelachse (Z3) verläuft.

4. Vorrichtung nach Anspruch 3, **dadurch gekennzeichnet, dass** der Hebel (15, 16) einen ersten Arm (22) aufweist, der sich auf einer Seite bezüglich der Achse (X27) der Schwenkverbindung (27) erstreckt, um den Verankerungspunkt (17) mit dem Stützelement (18) zu verbinden, und einen zweiten Arm (23), der sich auf der entgegengesetzten Seite bezüglich der Achse (X27) der Schwenkverbindung (27) erstreckt, um den Verankerungspunkt (17) mit einem Sperrelement (24) zu verbinden, das dazu eingerichtet ist, an dem Schieber (13, 14) zur Anlage zu kommen, an einem verstellbaren Anschlag (25), wie etwa einem Arretierstift, der von dem Schieber (13, 14) getragen wird.

5. Vorrichtung nach einem der vorhergehenden Ansprüche, **dadurch gekennzeichnet, dass** die Kontaktfläche (19), die zwischen dem Stützelement (18) des Hebels (15, 16) und der Rückseite (11B, 12B) des Druckstücks vorhanden ist, vollständig in einem axialen Bereich (H0), "zentraler axialer Bereich" genannt, enthalten ist, der auf dem von dem Druckstück (11, 12) eingenommenen axialen Bereich (H11, H12) zentriert ist und dessen axiale Erstreckung weniger als 40 %, vorzugsweise weniger als 20 % oder sogar weniger als 15 % der Erstreckung des von dem Druckstück (11, 12) eingenommenen axialen Bereichs (H11, H12) darstellt.

6. Vorrichtung nach einem der vorhergehenden Ansprüche, **dadurch gekennzeichnet, dass** das Druckstück (11, 12) von einer ersten Führung (30), die sich an einem ersten axialen Ende des Druckstücks (11, 12) befindet, und von einer zweiten Führung (31), die von der ersten Führung (30) verschieden ist und sich an einem zum ersten Ende entgegengesetzten zweiten axialen Ende des Druckstücks (11, 12) befindet, radial geführt wird, derart, dass sich die Kontaktfläche (19) zwischen dem Stützelement (18) und der Rückseite (11B, 12B) des Druckstücks zwischen der ersten und der zweiten Führung (30, 31) befindet, in einem Abstand von den Führungen (30, 31), vorzugsweise in gleichem Abstand von den Führungen (30, 31).

7. Vorrichtung nach einem der vorhergehenden Ansprüche, **dadurch gekennzeichnet, dass** das Druckstück (11, 12) von einem einzigen Hebel (15, 16) bewegt wird, dessen Verankerungspunkt (17) sich axial außerhalb des von dem Druckstück (11, 12) eingenommenen axialen Bereichs (H11, H12) befindet.

8. Vorrichtung nach einem der vorhergehenden Ansprüche, **dadurch gekennzeichnet, dass** wenigstens ein Teil, und vorzugsweise die Gesamtheit, der Andrückunterbaugruppen (10) jeweils einen ersten Schieber (13) umfasst, der einen ersten Hebel (15) trägt, der an der Rückseite (11B) eines ersten Druckstücks (11) zur Anlage kommt, das dazu eingerichtet ist, den ersten Fuß (6) der betreffenden Speiche (5) gegen die Nabe (3) zu pressen, und einen zweiten Schieber (14), der einen zweiten Hebel (16) trägt, der an der Rückseite (12B) eines zweiten Druckstücks (12) zur Anlage kommt, das dazu eingerichtet ist, den zweiten Fuß (7) der Speiche (5) gegen den ringförmigen Umfangsstreifen (4) zu pressen.

9. Vorrichtung nach Anspruch 8, **dadurch gekennzeichnet, dass** das Antriebssystem (20) derart ausgebildet ist, dass es selektiv entweder eine gleichzeitige Verlagerung des ersten Schiebers (13) und des zweiten Schiebers (14) auf den ersten Fuß (6) der Speiche (5) bzw. den zweiten Fuß (7) der Speiche erzeugen kann, oder eine getrennte Verlagerung des ersten und zweiten Schiebers (13, 14) nacheinander.

10. Vorrichtung nach einem der vorhergehenden Ansprüche, **dadurch gekennzeichnet, dass** sie ein gemeinsames Antriebssystem (20) umfasst, das mehreren der Andrückunterbaugruppen (10) gemeinsam ist und vorzugsweise allen Andrückunterbaugruppen (10) gemeinsam ist, wobei das gemeinsame Antriebssystem (20) einen Kranz (32, 33) umfasst, der mit einer Spiralführung (34) versehen ist, die auf der Mittelachse (Z3) zentriert und um diese drehbar gelagert ist und die mit einem Schieber (13, 14) jeder der betreffenden Andrückunterbaugruppen (10) zusammenwirkt, um eine Drehbewegung des Kranzes (32, 33) in eine radiale Translationsbewegung des Schiebers (13, 14) umzuwandeln.

11. Vorrichtung nach Anspruch 10, **dadurch gekennzeichnet, dass** die Spiralführung (34) mehrere konzentrische Führungswindungen (35) bildet und der Schieber (13, 14) eine Sohle (36) besitzt, die mit mehreren Eingriffslaschen (37) versehen ist, die eine zu den Führungswindungen (35) passende Form haben und die zueinander radial versetzt sind, um mit den mehreren konzentrischen Führungswindungen (35) zusammenzuwirken.

12. Vorrichtung nach Anspruch 8 und einem der Ansprüche 10 und 11, **dadurch gekennzeichnet, dass** das Antriebssystem (20) mindestens einen ersten Kranz (32) umfasst, der mit einer Spiralführung (34) versehen ist, wobei dieser erste Kranz (32) um die Mittelachse (Z3) drehbar gelagert ist und mit den ersten Schiebern (13) der betreffenden verschiedenen Andrückunterbaugruppen (10) gleichzeitig zusammenwirkt, um eine Drehbewegung des ersten Kranzes (32) in eine radiale Translationsbewegung der ersten Schieber (13) umzuwandeln, und einen zweiten Kranz (33), der mit einer Spiralführung (34) versehen ist, wobei dieser zweite Kranz (33) um die Mittelachse (Z3) drehbar gelagert ist und mit dem ersten Kranz (32) koaxial ist und mit den zweiten Schiebern (14) der verschiedenen Andrückunterbaugruppen (10) gleichzeitig zusammenwirkt, um eine Drehbewegung des zweiten Kranzes (33) in eine radiale Translationsbewegung der zweiten Schieber (14) umzuwandeln.

13. Vorrichtung nach einem der vorhergehenden Ansprüche, **dadurch gekennzeichnet, dass** sie ebenso viele um die Mittelachse (Z3) herum verteilte Andrückunterbaugruppen (10) umfasst, wie Speichen (5) im Inneren des Reifens (2) vorhanden sind.

## Claims

1. Assembly device (1) for manufacturing a tyre (2) that comprises a hub (3) having a central axis (Z3), a peripheral annular band (4) coaxial with the hub (3), and a plurality of spokes (5) that connect the hub (3) to the peripheral annular band (4) and to this end each comprise a first foot (6) fastened on a radially outer face (3E) of said hub (3) forming a first receiving face (3E) and a second foot (7) fastened on a radially inner face (41) of said peripheral annular band (4) forming a second receiving face (41), said assembly device (1) comprising a plurality of pressing sub-assemblies (10) that are each assigned to fastening a separate spoke (5) and each comprise at least one pusher (11, 12) arranged to press one of the first and second feet (6, 7) of the spoke (5) in question against the receiving face (3E, 41) of the hub (3) or the peripheral annular band (4) respectively that corresponds to said foot (6, 7) of the spoke, said assembly device being **characterized in that** each of said pressing sub-assemblies (10) comprises at least one traveller (13, 14) that is mounted radially movably relative to the central axis (Z3), under the control of a drive system (20), and that holds a lever (15, 16) that extends radially from an anchor point (17), via which said lever (15, 16) is rigidly connected to the traveller (13, 14), to a bearing member (18) that is situated axially at a distance from the anchor point (17) along the central axis (Z3), and via which said lever (15, 16) bears against said pusher (11, 12) in a contact area (19) that is situated on the back (11B, 12B) of said pusher, radially opposite the foot (6, 7) and the receiving face (3E, 41), and that is also contained in the axial range (H6, H7) occupied by the foot (6, 7) in question along the central axis (Z3), so that, when the drive system (20) radially moves the traveller (13, 14), the lever (15, 16) carried by said traveller transmits to the pusher (11, 12), by means of the bearing member (18), a clamping force (F15, F16) that presses said pusher (11, 12), and therefore the foot (6, 7) of the spoke, against the receiving face (3E, 41), and also provides, like a spring, through the elastic bending capacity of said lever (15, 16), elastic radial suspension of the pusher (11, 12) vis-à-vis the traveller (13, 14) and therefore against the foot (6, 7) of the spoke and the receiving face (3E, 41).

2. Device according to Claim 1, **characterized in that** the lever (15, 16) is separate from the pusher (11, 12) and **in that** the bearing member (18) has, in a radial plane containing the central axis (Z3), a rounded profile, preferably arc-shaped, that allows said bearing member (18) to roll on the back (11B, 12B) of the pusher, in order to accommodate the variations in orientation of the lever (15, 16) relative to the back (11B, 12B) of the pusher when the lever (15, 16) tilts and/or deforms in bending.

3. Device according to Claim 1 or 2, **characterized in that** the anchor point (17) is formed by a pivot connection (27) the axis (X27) of which is orthoradial relative to the central axis (Z3).

4. Device according to Claim 3, **characterized in that** the lever (15, 16) comprises a first branch (22) that extends on one side relative to the axis (X27) of the pivot connection (27), in order to connect the anchor point (17) to the bearing member (18), and a second branch (23) that extends on the opposite side relative to the axis (X27) of the pivot connection (27), in order to connect the anchor point (17) to a stop member (24) arranged to bear against the traveller (13, 14), against an adjustable stop (25), such as a screw needle, which is held by the traveller (13, 14).

5. Device according to one of the preceding claims, **characterized in that** the contact area (19) that exists between the bearing member (18) of the lever (15, 16) and the back (11B, 12B) of the pusher is strictly contained in an axial range (H0) referred to as the "central axial range" that is centred on the axial range (H11, H12) occupied by the pusher (11, 12) and the axial extent of which represents less than 40%, preferably less than 20%, or even less than 15% of the extent of said axial range (H11, H12) occupied by the pusher (11, 12).

6. Device according to one of the preceding claims, **characterized in that** the pusher (11, 12) is radially guided by a first guide (30) situated at a first axial end of said pusher (11, 12) and by a second guide (31) separate from the first guide (30) and situated at a second axial end of said pusher (11, 12) opposite the first end, so that the contact area (19) between the bearing member (18) and the back (11B, 12B) of the pusher is situated between said first and second guides (30, 31), at a distance from said guides (30, 31), preferably equidistant from said guides (30, 31).

7. Device according to one of the preceding claims, **characterized in that** the pusher (11, 12) is moved by a single lever (15, 16) the anchor point (17) of which is situated axially outside the axial range (H11, H12) occupied by the pusher (11, 12).

8. Device according to one of the preceding claims, **characterized in that** at least some, and preferably all, of the pressing sub-assemblies (10) each comprise a first traveller (13) that holds a first lever (15) that bears against the back (11B) of a first pusher (11) arranged to press the first foot (6) of the spoke (5) in question against the hub (3), and a second traveller (14) that holds a second lever (16) that bears against the back (12B) of a second pusher (12) arranged to press the second foot (7) of said spoke (5) against the peripheral annular band (4).

9. Device according to Claim 8, **characterized in that** the drive system (20) is designed so as to allow the selective generation of either a simultaneous movement of the first traveller (13) and the second traveller (14) against the first foot (6) of the spoke (5) and the second foot (7) of the spoke respectively, or a separate movement of said first and second travellers (13, 14) one after the other.

10. Device according to one of the preceding claims, **characterized in that** it comprises a shared drive system (20), common to a plurality of the pressing sub-assemblies (10), and preferably common to all of the pressing sub-assemblies (10), said shared drive system (20) comprising a ring (32, 33) that is provided with a spiral guide (34), which is centred on and rotatably mounted about the central axis (Z3), and which interacts with a traveller (13, 14) of each of said pressing sub-assemblies (10) in question in order to convert a rotation of said ring (32, 33) into a radial translation of said traveller (13, 14).

11. Device according to Claim 10, **characterized in that** the spiral guide (34) forms a plurality of concentric guide turns (35), and the traveller (13, 14) has a base (36) provided with a plurality of coupling tabs (37) with a shape conjugate to the guide turns (35) and that are radially offset from each other so as to interact with said plurality of concentric guide turns (35).

12. Device according to Claim 8 and one of Claims 10 and 11, **characterized in that** the drive system (20) comprises at least one first ring (32) provided with a spiral guide (34), which first ring (32) is rotatably mounted about the central axis (Z3) and interacts simultaneously with the first travellers (13) of the different pressing sub-assemblies (10) in question, to convert a rotation of said first ring (32) into a radial translation of said first travellers (13), and a second ring (33) provided with a spiral guide (34), which second ring (33) is rotatably mounted about the central axis (Z3) and coaxial with the first ring (32), and simultaneously interacts with the second travellers (14) of said different pressing sub-assemblies (10) to convert a rotation of said second ring (33) into a radial translation of said second travellers (14).

13. Device according to one of the preceding claims, **characterized in that** it comprises as many pressing sub-assemblies (10) distributed about the central axis (Z3) as there are spokes (5) in the tyre (2).
